# EUROPÄISCHE PATENTANMELDUNG

(11) **EP 2 908 114 A1**
(43) Veröffentlichungstag der Anmeldung: **19.08.2015**
(21) Anmeldenummer: 15000359.8
(22) Anmeldetag: 07.02.2015
(51) Int. Cl.: G01M 3/16, B60H 1/00, G01M 3/26

(54) **Verfahren zur Ermittlung von Undichtheiten und Kältemittelaustritten an hydraulischen Kreisläufen von Kältemittelbefüllanlagen**

(30) Priorität: 12.02.2014 DE 102014002196
(71) Anmelder: Dürr Somac GmbH, 09366 Stollberg (DE); Agramkow Fluid Systems A/S, 6400 Sønderborg (DK)
(72) Erfinder: Achatz, Thomas, 09366 Niederdorf (DE); Ritter, Jörg, 08280 Aue (DE); Lund, Bjarne, 6400 Sonderborg (DE)
(74) Vertreter: Patentanwälte Findeisen & Neumann

(57) **Zusammenfassung**

Die Erfindung betrifft ein Verfahren zur Ermittlung von Undichtheiten und Kältemittelaustritten an hydraulischen Kreisläufen von Kältemittelbefüllanlagen, insbesondere zur Befüllung von Klimaanlagen für Fahrzeuge. Dabei wird ein vom Normalfall abweichendes Betriebsverhalten einer Förderpumpe zur Methode der Erkennung einer Leckage des hydraulischen Systems, indem das normale Betriebsverhalten der Förderpumpe und die für das Betriebsverhalten relevanten Einflussfaktoren analysiert und in einem Softwarealgorithmus beschrieben werden, indem der Softwarealgorithmus Abweichungen von diesem Betriebsverhalten erkennt und indem festgestellte Abweichungen derart ausgewertet werden, dass eine Leckage beschrieben werden kann. Weiterhin wird eine Vorrichtung zur Durchführung des Verfahrens vorgeschlagen.

## Beschreibung

Die Erfindung betrifft eine technische Lösung zur Ermittlung von Undichtheiten und Kältemittelaustritten an hydraulischen Kreisläufen von Kältemittelbefüllanlagen, insbesondere zur Befüllung von Klimaanlagen für Fahrzeuge.

Hydraulische Kreisläufe zur Befüllung von Kältemittel bestehen typischerweise aus einem Speicher, der durch eine pneumatische Förderpumpe gefüllt wird. Über eine geeignete Messvorrichtung zur Messung der zu befüllenden Kältemittelmasse im Durchflussverfahren wird das Kältemittel über einen Adapter beispielsweise in eine Fahrzeugklimaanlage gebracht. Dabei wird durch die Förderpumpe immer wieder Kältemittel in den Speicher gefördert.

Sofern das Adapterventil geschlossen wird, fördert die pneumatische Förderpumpe solange Kältemittel in den Speicher, bis entsprechend dem eingestellten Betriebsdruck und dem Übersetzungsverhältnis der Förderpumpe ein Druckausgleich gegeben ist und die Pumpe stoppt. Ein Wiederanlaufen der Förderpumpe wird durch Druckabbau im gesamten Kreislauf ausgelöst, im Normalfall durch eine gezielte Kältemittelentnahme.

Der Normalfall wird durch ein spezifisches Verhalten der Förderpumpe beschrieben und ist abhängig von der Gestaltung des hydraulischen Kreislaufs, der eingesetzten Speichergröße und physikalischen Einflussgrößen wie Temperatur und Drucklage des Mediums. Das spezifische Verhalten lässt sich analysieren und beschreiben. Für Abweichungen können Toleranzen definiert werden.

Typische Parameter, mit denen der Normalfall beschrieben werden kann, sind bekannte Entnahmemengen, Zykluszeiten der Entnahme, Startdrucklage, Pumpenlaufzeit bis zum Erreichung der Enddrucklage im Speicher und die Hubfrequenz. Dabei werden über mindestens einen Sensor Pumpenlaufzeit und Pumpenfrequenz sowie über einen Drucksensor die Enddrucklage gemessen. Derartige messtechnische Anordnungen sind als Stand der Technik bekannt. Das analysierte Betriebsverhalten im Normalfall mit definierten Toleranzvorgaben ist dem Steuerungssystem, welches die Vorrichtung steuert, bekannt.

Diese Betriebsweise entspricht den Normalfallbedingungen. Probleme können sich jedoch ergeben, sofern vom Normalfall abweichende Betriebsbedingungen auftreten.

Aufgabe der Erfindung ist es, eine technische Lösung zu schaffen, mit der ein vom Normalfall abweichendes Betriebsverhalten, dessen Ursache Störungen im Betriebsablauf sind, detektiert werden kann. Hierbei sollen insbesondere am hydraulischen System auftretende Undichtheiten schnell festgestellt werden, um Störungen im Betriebsablauf des gesamten hydraulischen Systems weitgehend zu vermeiden.

Diese Aufgabe wird gelöst, indem ein vom Normalfall abweichendes Betriebsverhalten einer Förderpumpe zur Methode der Erkennung einer Leckage des hydraulischen Systems wird. Hierbei werden das normale Betriebsverhalten der Förderpumpe und die für das Betriebsverhalten relevanten Einflussfaktoren analysiert und in einem Softwarealgorithmus beschrieben. Dieser Softwarealgorithmus erkennt Abweichungen vom Betriebsverhalten und wertet diesbezüglich festgestellte Abweichungen derart aus, dass eine Leckage beschrieben werden kann. Dabei ist der Softwarealgorithmus vorzugsweise im Steuerungssystem der Kältemittelanlage integriert.

Dieses Verfahren kann mit verschiedenartiger Gerätetechnik realisiert werden. Eine hierfür bevorzugte Variante schlägt vor, dass die pneumatische Förderpumpe der Befüllanlage eine Sensorik zur Erfassung der Bewegungen des Förderkolbens aufweist, wobei diese Sensorik mit einem Steuerungssystem in Wirkverbindung steht, mit dem auf Grundlage der Eingangsinformationen zur Kolbenbewegung eine Unterscheidung zwischen einem dem Normalfall entsprechenden Betriebsverhalten und einem hiervon abweichenden Verhalten erreicht wird.

Sofern in medienführenden Leitungen im hydraulischen Kreislauf der Kältemittelbefüllanlage im Bereich von Pumpe und Speicher ein Leck auftritt, ergeben sich Undichtheiten und Kältemittelaustritte. Dadurch ändert sich das spezifische Betriebsverhalten der Pumpe und es entstehen Abweichungen vom eigentlichen Normalverhalten. Derartige Abweichungen sind erkennbar durch längere Pumpenlaufzeiten bis zum Erreichen der Enddrucklage und/oder durch das Arbeiten der Pumpe in Zeiträumen, die im Normalfall als Stillstandzeit definiert sind und/oder durch eine abweichende Pumpenfrequenz. Durch Anwendung der erfindungsgemäßen technischen Lösung wird es nunmehr möglich, auf Grundlage eines kontinuierlichen Vergleiches des jeweils aktuellen Pumpenverhaltens zu einem vorab definierten Normalbetriebsfall Lecks im hydraulischen System zu erkennen.

Nachfolgend wird ein Ausführungsbeispiel der Erfindung anhand der Zeichnung erläutert.

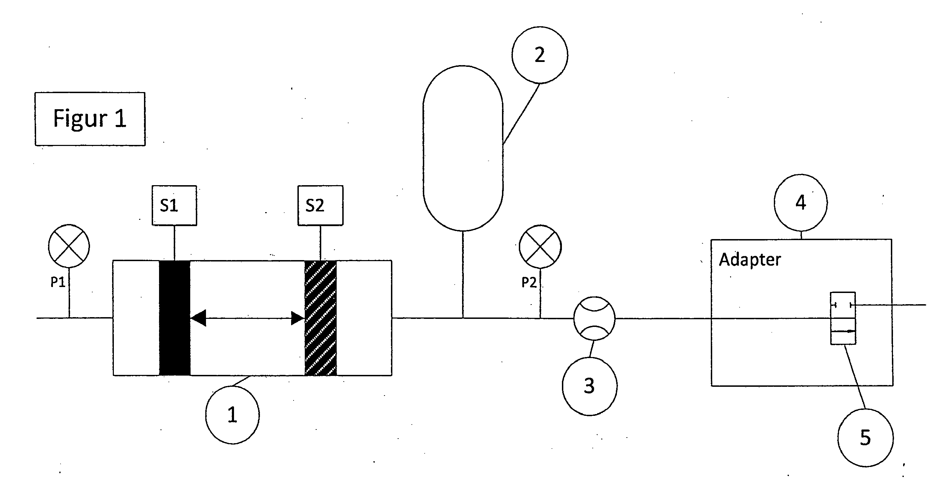

In Fig. 1 ist ein Abschnitt eines hydraulischen Kreislaufs zur Befüllung von Baugruppen, zum Beispiel zur Befüllung der Klimaanlage eines nicht gezeigten Kraftfahrzeuges, mit Kältemittel dargestellt. Im Strömungsverlauf ist eine pneumatische Förderpumpe 1 angeordnet, mit der ein Speicher 2 mit einem Kältemittel gefüllt wird. Im weiteren Strömungsverlauf ist eine Messvorrichtung 3 vorgesehen, mit der die zu befüllende Kältemittelmasse im Durchflussverfahren gemessen wird. Das Kältemittel wird über einen Adapter 4 mit einem zugeordneten Adapterventil 5 in die zu befüllende Baugruppe gebracht, beispielsweise in eine Fahrzeugklimaanlage. Dabei wird durch die Förderpumpe 1 immer wieder Kältemittel in den Speicher 2 gefördert.

Sofern das Adapterventil 5 geschlossen wird, fördert die pneumatische Förderpumpe 1 noch solange Kältemittel in den Speicher 2, bis entsprechend dem eingestellten Betriebsdruck und dem Übersetzungsverhältnis der Förderpumpe 1 ein Druckausgleich gegeben ist und die Förderpumpe 1 stoppt.

Ein Wiederanlaufen der Förderpumpe 1 wird durch einen Druckabbau im gesamten Kreislauf ausgelöst. Für die Erfassung der hierfür relevanten Parameter sind ein Drucksensor P1 zur Erfassung der Startdrucklage, Sensoren S1 und S2 zur Erfassung von Pumpenlaufzeit und Pumpenfrequenz sowie ein weiterer Drucksensor P2 zur Erfassung der Enddrucklage vorgesehen.

Mit einer derartigen, anhand von Fig.1 lediglich beispielsweise erläuterten gerätetechnischen Ausstattung kann erfindungsgemäß ein Verfahren zur Ermittlung von Undichtheiten und Kältemittelaustritten an hydraulischen Kreisläufen von Kältemittelbefüllanlagen durchgeführt werden, indem ein vom Normalfall abweichendes Betriebsverhalten einer Förderpumpe zur Methode der Erkennung einer Leckage des hydraulischen Systems wird,

Dabei werden zunächst das normale Betriebsverhalten der Förderpumpe und die für das Betriebsverhalten relevanten Einflussfaktoren analysiert und in einem Softwarealgorithmus beschrieben. Der Softwarealgorithmus erkennt Abweichungen vom vorab definierten Betriebsverhalten und wertet festgestellte Abweichungen derart aus, dass eine Leckage beschrieben werden kann.

## Patentansprüche

1. Verfahren zur Ermittlung von Undichtheiten und Kältemittelaustritten an hydraulischen Kreisläufen von Kältemittelbefüllanlagen, insbesondere zur Befüllung von Klimaanlagen für Fahrzeuge, **dadurch gekennzeichnet,**
**dass** ein vom Normalfall abweichendes Betriebsverhalten einer Förderpumpe zur Methode der Erkennung einer Leckage des hydraulischen Systems wird,
indem das normale Betriebsverhalten der Förderpumpe und die für das Betriebsverhalten relevanten Einflussfaktoren analysiert und in einem Softwarealgorithmus beschrieben werden,
indem der Softwarealgorithmus Abweichungen von diesem Betriebsverhalten erkennt und indem festgestellte Abweichungen derart ausgewertet werden, dass eine Leckage beschrieben werden kann.

2. Verfahren nach Anspruch 1, **dadurch gekennzeichnet,**
**dass** der Softwarealgorithmus zur Erkennung von Abweichungen des Betriebsverhaltens im Steuerungssystem der Kältemittelbefüllanlage integriert ist.

3. Vorrichtung zur Durchführung eines Verfahrens zur Ermittlung von Undichtheiten und Kältemittelaustritten an hydraulischen Kreisläufen von Kältemittelbefüllanlagen, insbesondere zur Befüllung von Klimaanlagen für Fahrzeuge, wobei ein vom Normalfall abweichendes Betriebsverhalten einer Förderpumpe gemäß Anspruch 1 zur Methode der Erkennung einer Leckage des hydraulischen Systems wird, **dadurch gekennzeichnet,**
**dass** die pneumatische Förderpumpe eine Sensorik zur Erfassung der Bewegungen des Förderkolbens aufweist, wobei die Sensorik mit einem Steuerungssystem in Wirkverbindung steht, mit dem auf Grundlage der Eingangsinformationen zur Kolbenbewegung eine Unterscheidung zwischen einem dem Normalfall entsprechenden Betriebsverhalten und einem hiervon abweichenden Verhalten erreicht wird.
